# EUROPEAN PATENT APPLICATION

(11) **EP 1 748 665 A1**
(43) Date of publication of application: **31.01.2007**
(21) Application number: 05291607.9
(22) Date of filing: 27.07.2005
(51) Int. Cl.: H04Q 7/38

(54) **Method for transferring information related to at least a mobile terminal in a mobile telecommunication network**

(71) Applicant: Mitsubishi Electric Information Technology Centre Europe B.V., 1119 NS Schiphol Rijk (NL); MITSUBISHI DENKI KABUSHIKI KAISHA, Chiyoda-ku Tokyo 100-8310 (JP)
(72) Inventor: Voyer, Nicolas, Mitsubishi Electricité, 35708 Rennes Cedex 7 (FR); Pautonnier-Perrot, Sophie, Mitsubishi Electricité, 35708 Rennes Cedex 7 (FR); Lavillonniére, Eric, Mitsubishi Electricité, 35708 Rennes Cedex (FR)
(74) Representative: Maillet, Alain

(57) **Abstract**

The invention concerns a method for transferring information related to at least a mobile terminal in a mobile telecommunication network comprising a plurality of base stations linked each other by a telecommunication network, characterised in that the method comprises the steps executed by a base station serving a mobile terminal of :
- obtaining (S405) the identifiers of at least two neighbouring base stations,
- transferring (S406) to at least the two neighbouring base stations, information related to at least a mobile terminal enabling at least one neighbouring base station to serve the mobile terminal.

## Description

The present invention relates to a method for transferring information related to at least a mobile terminal in a mobile telecommunication network comprising a plurality of base stations linked each other by a telecommunication network.

A mobile telecommunication network, that provides telecommunication services to mobile terminals wandering inside of an area composed of multiple radio cells, typically offers means to the mobile telecommunication operators to verify that the mobile terminal has the rights to access its network before granting the associated resource.

A mobile telecommunication network is typically be composed of numerous base stations connected to multiple base station controllers, themselves being connected to few VLR (Visited Location Registry) connected to at least one common HLR (Home Location Registry).

In such network, the information related to an authorised mobile terminal are stored inside the mobile terminal and the HLR. By comparing the information stored in the mobile terminal and the information stored in the HLR, one can authenticate the mobile terminal. Based on these information, the mobile telecommunication network grants or not an access to the mobile terminal. Such centralized authentication, generates some latency in the authentication process.

In order to reduce the latency, the concept of VLR has been introduced so as to minimise the number of accesses to the HLR, that deals with a huge number of mobile terminals, and would typically not stand the large signalling required for the access granting of all the mobile terminals of the whole network. The VLR can be viewed as achieving a delegation of HLR functions, and more specifically deals with HLR functions for all mobile terminals located in its area of influence. To do so, VLR and HLR accomplish a delegation of competence, so that the access grant can sometimes be decided by the VLR autonomously.

Such hierarchical architecture still generates some latency in the authentication process, because the base station has to relay the authentication requests from the mobile station to the VLR, and the VLR has to process the requests of many mobile stations in parallel.

In order to reduce latency, one could delegate the authentication process to the base stations, but such solution is not acceptable because it is not compatible with the notion of fast mobility. Each time a mobile terminal would move from one cell of a base station to the cell of another base station, the access grant should be renegotiated between the mobile terminal and the other base station. The other base station, being unaware of the mobile terminal information, would ask such information to the HLR, which would result in a significant increase in signalling to be dealt by the HLR. The signalling time for exchanging the mobile terminal information would be so long that it would not permit in practice the efficient realisation of cell reselection functions for fast moving mobiles in the sense that the mobile terminal may have moved to another cell controlled by another base station before that the mobile terminal information are received.

For the reasons mentioned above, one can see that efficient cell reselection is restricted in the current technology within cells controlled by one VLR, and that mobility across areas served by different VLR is not satisfactory.

The access points of wireless local area networks like the one disclosed in the standard IEEE 802.11 contain some access control mechanisms, where the Radius server can be located inside the access point itself. But such wireless local area networks do not propose any practical scheme that can preserve a fast access grant and fast and efficient cell reselection between neighbours wireless local area networks.

New generation of mobile telecommunication networks, like the third generation of cellular networks, provide high data rate transmission but the latency in the authentication process has not been improved.

Furthermore, new mobile telecommunication networks propose many services with different quality of services. Each time a handover is made, the new serving base station has to set up the communication parameters to be used by the radio interface and the fixed network interface to carry this communication context. The communication parameters can be manifold, for instance a code number, a frequency, a time slot, a data format, communication ports, etc... These communication parameter are derived by the base station from higher level parameters of the communication context, like the quality of service. For that, the new serving base station has to get, during the handover procedure, the higher level parameters of the communication context from cither the mobile terminal or from the old serving base station, and then from this information, the new serving base station should derive the communication parameters. The transfer of such information related to the mobile terminal slows down the handover procedure. Also, the process of deriving the communication parameters from the high level parameters of the communication context is slow, and may involve additional signalling procedures. The aggregated time for exchanging the mobile terminal information and for deriving the communication parameters would be so long that it would not permit in practice the efficient realisation of handover functions for fast moving mobiles in the sense that the mobile terminal may have moved to another cell controlled by another base station before that the information related to the mobile terminal are received or before the communication parameters are derived.

The aim of the invention is therefore to propose a method and a device which make it possible to narrow down the latency in the mobility process like a cell reselection process or a handover procedure.

To that end, the present invention concerns a method for transferring information related to at least a mobile terminal in a mobile telecommunication network comprising a plurality of base stations linked each other by a telecommunication network, characterised in that the method comprises the steps executed by a base station serving a mobile terminal of :
- obtaining the identifiers of at least two neighbouring base stations,
- transferring to at least the two neighbouring base stations, information related to at least a mobile terminal enabling at least one neighbouring base station to serve the mobile terminal.

The present invention concerns also a device for transferring information related to at least a mobile terminal in a mobile telecommunication network comprising a plurality of base stations linked each other by a telecommunication network, characterised in that the device is included in a base station and comprises:
- means for obtaining the identifier of at least two neighbouring base stations,
- means for transferring to the least two neighbouring base stations information related to at least a mobile terminal enabling at least one neighbouring base station to serve the mobile terminal.

Thus, it is possible to reduce the latency of a mobility process like a cell reselection process or of a handover procedure.

If mobile terminal, which is in idle mode, moves from one cell of a base station to a cell of another base station, the other base station has the necessary information related to the mobile terminal for an authentication procedure without needing to proceed as it is disclosed in the state of the art. The HLR and VLR procedure for authentication is no more required, the other base station can proceed, by itself, the authentication procedure, and then enables a fast cell reselection process.

If a mobile terminal, which is in communication mode, moves from one cell of a base station to a cell of another base station, the other base station has already the necessary information related to the mobile terminal for an authentication procedure and/or a configuration of its radio and network interfaces according to the information related to the mobile terminal and then enables a fast handover.

By transmitting the information related to at least one mobile terminal to neighbouring base stations, only the base stations which are susceptible of being involved in a cell reselection or a handover procedure receive the information related to at least a mobile terminal. The information related to a mobile terminal is transferred prior the mobile terminal moves.

According to a particular feature, the base station transmits a list of the identifiers of the mobile terminals served by the base station to its neighbouring base stations.

Thus, the neighbouring base stations are informed about the mobile terminals the base station serves. Such information can be used by the neighbouring base stations in order to remove some information related to mobile terminals for which a cell reselection or a handover procedure is not needed.

According to a particular feature, the list of the identifiers of the mobile terminals served by the base station is transferred periodically or when the base station starts to serve a new mobile terminal.

Thus, by transferring the list of the identifiers of the mobile terminals served by the base station periodically, the amount of transferred information messages is reduced. By transferring the list of the identifiers of the mobile terminals served by the base station when the base station starts to serve a new mobile terminal, the neighbouring base stations are informed rapidly about any modification of the list.

According to a particular feature, the base station transfers to its neighbouring base stations the identifier of at least a mobile terminal the base station stops to serve.

Thus, the neighbouring base stations are informed about the mobile terminals the base station stops to serve. Such information can be used by the neighbouring base station in order to remove some information related to mobile terminals for which a cell reselection or a handover procedure is not needed.

According to a particular feature, the identifier of at least a mobile terminal the base station stops to serve is transferred when the base station stops to serve a mobile terminal or when the base station has stopped to serve a predetermined number of mobile terminals.

Thus, by transferring the identifier of the mobile terminal the base station stops to serve when the base station stops to serve the new mobile terminal, the neighbouring base station are informed rapidly about any modification. By transferring the identifiers of the mobile terminals the base station stops to serve when the base station stops to serve a predetermined number of mobile terminals, the amount of transferred information is reduced.

According to a particular feature, prior to transfer the information related to the at least one mobile terminal, the information related to the at least one mobile terminal is received from another base station or a server of the mobile telecommunication network.

Thus, when the information related to the at least one mobile terminal is received from another base station, the base station doesn't need to request such information to a server later on, at the time of cell reselection. It can then authenticate the mobile terminal rapidly. When the information related to the at least one mobile terminal is received from another base station, the base station doesn't need to get such information from the at least one mobile terminal or from the former serving base station later on, at the time of a handover. Also, the base station can derive the communication context parameters from the information related to the at least one mobile terminal. The base station doesn't need to derive the communication context parameters later on, at the time of a handover. The handover latency is then reduced.

When the mobile terminal is unknown by any base station, as example, when a mobile terminal is switched on in an area, the base station can obtain the information related to the at least one mobile terminal from a server.

According to a particular feature, a neighbouring base station is a base station the cell of which is neighbour to the cell of the base station. The information related to the at least one mobile terminal are transferred to the neighbouring base stations which are not neighbours to the cell of the base station from which the information related to the at least one mobile terminal has been received.

Thus, the amount of transferred information is reduced.

According to a particular feature, the base station receives from a neighbouring base station, an identifier of at least one mobile terminal the neighbouring base station starts to serve and the identifier of the neighbouring base station is memorised in a list of base stations which serve the mobile terminal.

Thus, it is possible to manage cases where mobile terminals are served by a plurality of base stations simultaneously.

According to a particular feature, the base station receives from a neighbouring base station, an identifier of at least one mobile terminal the neighbouring base station stops to serve and the base station removes the identifier of the neighbouring base station from the list of base stations which serve the mobile terminal.

According to a particular feature, the base station deletes the information related to the mobile terminal if the list of base stations which serve the mobile terminal is empty or if each list of served mobile terminals transmitted by each neighbouring base stations doesn't include the identifier of the mobile terminal or if each list of served mobile terminals transmitted by neighbouring base stations within a predetermined period of time docsn't include the identifier of the mobile terminal or if the list of base stations which serve the mobile terminal is empty and each list of served mobile terminals transmitted by each neighbouring base stations doesn't include the identifier of the mobile terminal or if the list of base stations which serve the mobile terminal is empty and each list of served mobile terminals transmitted by neighbouring base stations within a predetermined period of time doesn't include the identifier of the mobile terminal.

Thus, by deleting the information related to the mobile terminal if the list of base stations which serve the mobile terminal is empty, the use of the memory of the base stations is optimised.

By deleting the information related to the mobile terminal if the list of base stations which serve the mobile terminal is empty and each list of served mobile terminals transmitted by each neighbouring base stations doesn't include the identifier of the mobile terminal, the deletion is made only when a base station is certain that all its neighbouring base stations don't serve a mobile terminal.

By deleting the information related to the mobile terminal if the list of base stations which serve the mobile terminal is empty and each list of served mobile terminals transmitted by neighbouring base stations within a predetermined period of time doesn't include the identifier of the mobile terminal, the deletion can be made even if a neighbouring base station is switched off and no longer transmits its list of served mobile stations.

According to a particular feature, the base station activates a timer associated to each received information related to a mobile terminal, resets each timer associated to the information related to mobile terminals if a list of served mobile terminals is received from a neighbouring base station and comprises an identifier of the mobile terminal and deletes the information related to a mobile terminal if the timer associated to the information related to the mobile terminal expires.

Thus, there is no need for the base stations to inform their neighbouring base stations that they stop to serve a mobile terminal. The amount of transfer is then reduced.

The present invention concerns also a method for enabling a neighbouring base station of a base station serving a mobile terminal to serve the mobile terminal in a mobile telecommunication network comprising a plurality of base stations linked each other by a telecommunication network, characterised in that the method comprises the steps executed by the neighbouring base station of the base station serving the mobile terminal of :
- receiving information related to a mobile terminal from the base station serving the mobile terminal,
- detecting a mobility process between the mobile terminal and the neighbouring base station,
- enabling the serve of the mobile terminal using the received information.

The present invention concerns also a device for enabling a neighbouring base station of a base station serving a mobile terminal to serve the mobile terminal in a mobile telecommunication network comprising a plurality of base stations linked each other by a telecommunication network, characterised in that the device is included in the neighbouring base station of the base station serving the mobile terminal and comprises:
- means for receiving information related to a mobile terminal from the base station serving the mobile terminal,
- means for detecting a mobility process between the mobile terminal and the neighbouring base station,
- means for enabling the serve of the mobile terminal using the received information.

Thus, it is possible to reduce the latency of a mobility process like a cell reselection process or a handover procedure.

The present invention concerns also a signal transmitted by a base station of a mobile telecommunication network to at least a neighbouring base station of the mobile telecommunication network passing through a telecommunication network linking the base stations, characterised in that the signal comprises information related to at least a mobile terminal served by the base station enabling at least one neighbouring base station to serve the mobile terminal.

Since the features and advantages relating to the signal are the same as those set out above related to the method and device according to the invention, they will not be repeated here.

According to still another aspect, the present invention concerns computer programs which can be directly loadable into a programmable device, comprising instructions or portions of code for implementing the steps of the methods according to the invention, when said computer programs are executed on a programmable device.

Since the features and advantages relating to the computer program are the same as those set out above related to the method and device according to the invention, they will not be repeated here.

The characteristics of the invention will emerge more clearly from a reading of the following description of an example embodiment, the said description being produced with reference to the accompanying drawings, among which :
Fig. 1 is a diagram representing the architecture of a mobile telecommunication network according to the present invention;
Fig. 2 is a block diagram of a base station according to the present invention;
Fig. 3 is a diagram representing the cells of the mobile telecommunication network ;
Fig. 4 is an algorithm executed by a base station when a mobile terminal enters in the cell of the base station and wherein, the base station transfers the information related to the mobile terminal to its neighbouring base stations according to a first mode of realisation of the present invention ;
Fig. 5 is an algorithm executed by a base station when it stops to serve a mobile terminal according to the first mode of realization of the present invention ;
Fig. 6 is an algorithm for transferring the list of mobile terminals served by a base station ;
Fig. 7 is an algorithm executed by a base station when it stops to serve at least a mobile terminal according to a second mode of realization of the present invention;
Fig. 8 is an algorithm executed by a base station when it receives a message from a neighbouring base station informing that the neighbouring base station serves a mobile terminal according to the first mode of realization of the present invention ;
Fig. 9 is an algorithm executed by a base station when it receives a message representative of the stop to serve at least a mobile terminal by a neighbouring base station according to the Figs. 5 or 7 of the present invention ;
Fig. 10 is an algorithm executed by a base station when it receives a message from a neighbouring base station informing that the neighbouring base station serves at least a mobile terminal according to the Fig. 4 or the Fig. 6 of the present invention;
Fig. 11 is an algorithm executed by a base station for maintaining a list of base stations which serve a mobile terminal according to the present invention when it receives a message representative of the stop to serve at least a mobile terminal by a neighbouring base station according to the Figs. 5 or 6 or 7 of the present invention ;
Fig. 12a, 12b and 12c disclose algorithms of a variant of the algorithm of the Fig. 11 executed by in parallel by a base station for maintaining a list of base stations which serve a mobile terminal it receives a message representative of the stop to serve at least a mobile terminal by a neighbouring base station according to the Fig. 6 of the present invention;
Fig. 13 discloses an algorithm of another variant of the algorithm of the Fig. 11 executed by a base station for maintaining a list of base stations which serve a mobile terminal ;
Fig. 14 is a diagram describing the overview of the different operations executed by the base stations and the exchange of messages between the base stations when a mobile terminal moves from one cell to a neighbouring cell, according to one variant of the algorithm of Fig. 11.

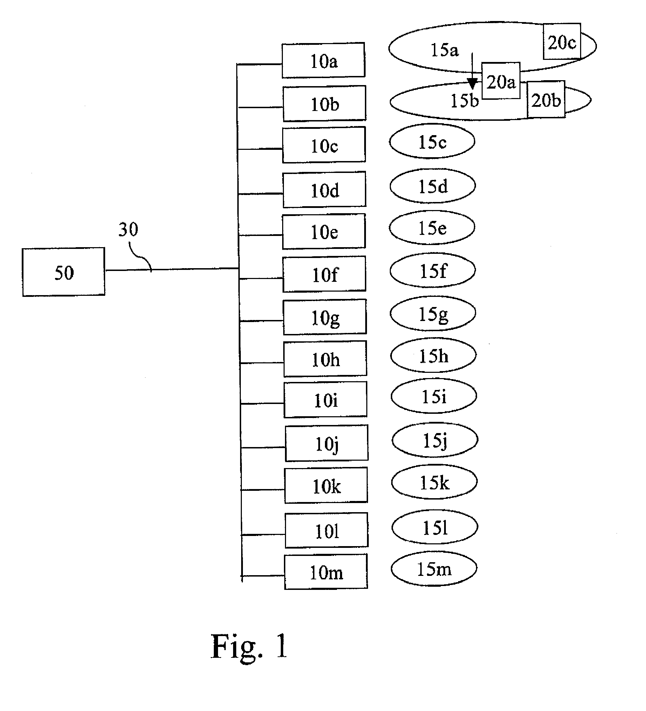

Fig. 1 is a diagram representing the architecture of a mobile telecommunication network according to the present invention.

In the mobile telecommunication network, a server 50 is connected to a plurality of base stations 10a to 10m through a telecommunication network 30. The telecommunication network 30 is a dedicated wired network or a public network like a public switched network or an IP based network or a wireless network or a combination of above cited networks.

The telecommunication network 30 connects the base stations 10 together and permits the transfer of messages and of information between the base stations 10 according to the present invention.

The server 50 stores information about all mobile terminals 20 of the mobile telecommunication network and when a base station 10 requests information about an unknown mobile terminal 20, it transfers to the base station 10 the information related to the mobile terminal 20 through the telecommunication network 30.

Each base station 10 is able, according to the present invention, to grant or not an access to a mobile terminal 20 by comparing the information stored in the mobile terminal 20 and information it stores.

According to the invention, when a base station 10 grants an access to a mobile terminal 20, it transfers through the telecommunication network 30 to the base stations 10 of the neighbouring cells 15, the information related to the mobile terminal 20.

Each base station 10 is able to transfer and or receive data through a wireless area 15. Such area will be called hereinafter a cell 15.

Two base stations 10 are neighbours if their respective cells 15 are located in the neighbourhood of each other or neighbours on each other or intersect each other.

In the Fig. 1, only one server is shown, but we can understand that a more important number of servers can be used in the present invention. On a similar way, only thirteen base stations 10a to 10m and their respective cells 15a to 15m are shown, but we can understand that a more important number of base stations 10a to 10m and cells 15a to 15m are used in the present invention.

In the Fig. 1, three mobile terminals 20a, 20b and 20c are shown. The mobile terminal 20a was previously served by the base station 10a and moves to the cell 15b of the base station 10b.

A mobile terminal 20 is served by a base station 10, if it can establish or if it continues a communication through the base station 10.

The present invention reduces the latency of mobility process like a cell reselection process or a handover procedure.

A cell reselection process occurs when a mobile terminal 20 is in idle mode and moves from one cell to a neighbouring cell. A mobile terminal 20 is in an idle mode when it is not in communication with another telecommunication device. When a mobile terminal 20is in the idle mode, it has to select the best cell 15 in case a communication has to be established. Such process is the cell reselection process.

During a cell reselection process, information related to the mobile terminal are, as example, data used to authenticate the mobile terminal 20 and to check its access rights, data used later, when a communication is established with the mobile terminal like an encryption key, the details of the service access contract of the mobile terminal. A base station 10 uses the information related to a mobile terminal 20 in order to make a cell reselection pre-processing prior to a possible cell reselection process. Such cell reselection pre-processing consists in memorizing the information related to the mobile terminal 20.

A handover procedure occurs when a mobile terminal 20 is in communication with another telecommunication device through a given base station 10 and moves to a cell 15 of a neighbouring base station 15. During the handover procedure, the given base station 10 has to stop to serve the mobile terminal 20 and the neighbouring base station 10 has to start to serve the mobile terminal 20 enabling the continuation of the communication. During a soft handover procedure, the neighbouring base station 10 has to start to serve the mobile terminal 20, while the given base station 10 keeps serving the mobile terminal 20, enabling macro-diversity, the simultaneous continuation of the communication over multiple cells.

During a handover procedure, information related to the mobile terminal 20 are needed for the target base station 10 to configure its wireless interface and its network interface so as to connect the mobile terminal to the network 30 via a newly established radio link and provide a relay of the information flow in the handover.

More precisely, information related to the mobile terminal 20 are, as example, the public key of the mobile terminal 20 in asymmetric encryption/authentication systems, the secret encryption/decryption key in symmetric flow encryption systems, the quality of service information, defining the flow of communication, in terms of average and peak data rates, the granularity, the time/latency constraints for the communication contexts of the mobile terminal 20, the entry port reference of the network interface which has to be used for routing the communication from/to the mobile terminal 20 to the telecommunication network 30.

Such information are used to setup the wireless interface and the network interface. Once set up, the wireless interface is ready to synchronise with the mobile terminal 20, and a handover procedure is completed once the mobile terminal 20, informed of the wireless interface configuration, accomplishes the synchronisation on the wireless interface.

The setup of both wireless interface and the network interface is time and resource consuming. For instance, the base station 10 decides on which frequency /time slot /code it should operate, which can noticeably depend on the quality of service parameters, such as the average peak rate, to provide to the mobile terminal 20. The base station 20 also checks the availability of hardware and software resources, at both wireless and network interfaces, and set up a connection between hardware and software resource.

A neighbouring base station 20, receiving such information related to a mobile terminal from the base station serving the mobile terminal 20 currently serving the mobile terminal can then make a handover pre-processing which consists in memorising the information related to the mobile terminal 20 and to set up the wireless interface 205 and the network interface 206 prior to a possible handover procedure is engaged.

In the Fig. 1, the mobile terminal 20c is served by the base station 10a and the mobile terminal 20b is served by the base station 10b.

One can understand that a larger amount of mobilc terminals 20 are served by the base stations 20, only three mobile terminals are shown for the sake of simplicity.

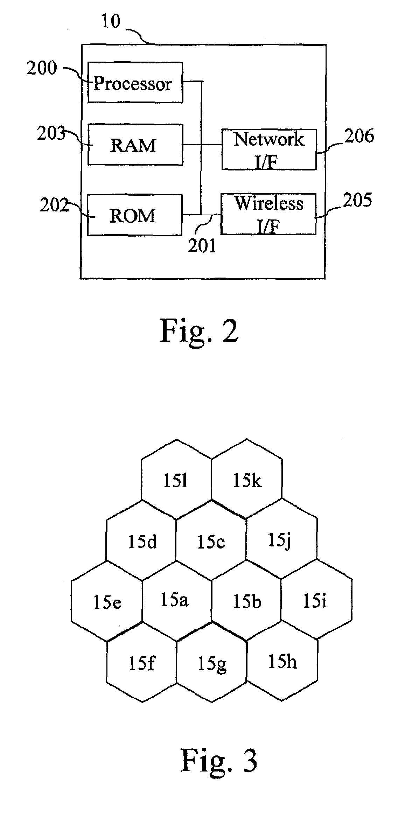

**Fig. 2** is a block diagram of a base station according to the present invention.

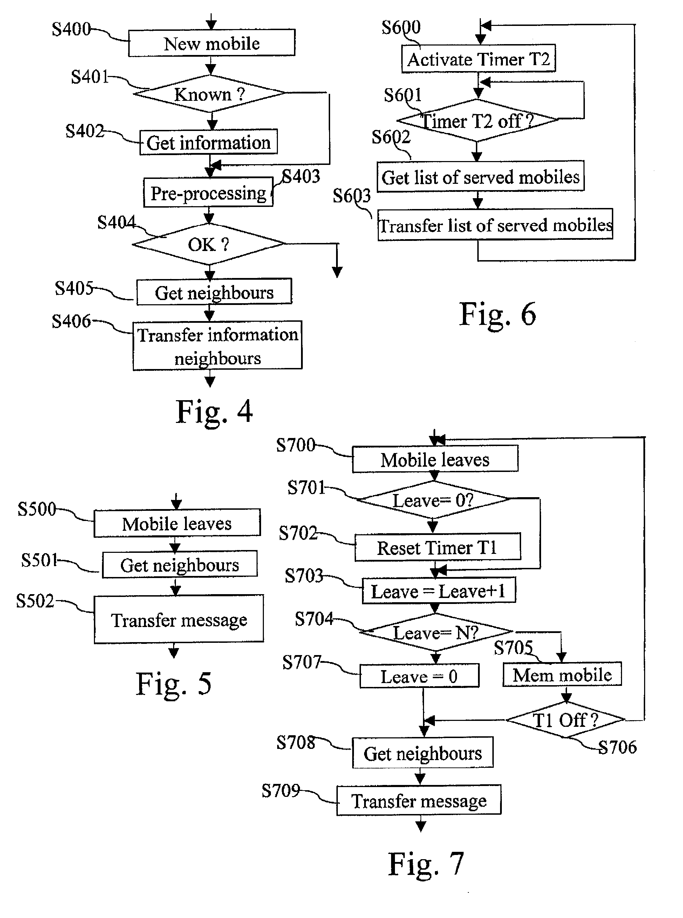

The base station 10 has, for example, an architecture based on components connected together by a bus 201 and a processor 200 controlled by programs as disclosed in the Figs. 4 to 14.

The bus 201 links the processor 200 to a read only memory ROM 202, a random access memory RAM 203, a network interface 206 and a wireless interface 205.

The memory 203 contains registers intended to receive variables, information related to mobile terminals 20 and the instructions of the programs related to the algorithms as disclosed in the Figs. 4 to 14.

The processor 200 controls the operation of the network interface 206 and the wireless interface 205.

The read only memory 202, contains instructions of the programs related to the algorithms as disclosed in the Figs 4 to 14 which are transferred, when the base station 10 is powered on to the random access memory 203.

The base station 10a is connected to the telecommunication network 30 through the network interface 206. As example, the network interface 206 is a DSL (Digital Subscriber Line) modem, or an ISDN (Integrated Services Digital Network) interface, etc. Through such interface, the base station 10a receives information related to mobile terminals 20 from the server 50 or from neighbouring base stations 10. The base station 10a receives also, through the network interface 206, information related to the leaving by at least a mobile terminal 20 of the cell 15b of the base station 10b. The base station 10a transmits through the network interface 206, information related to at least a mobile terminal 20, informs the neighbouring base stations 10 that, it stops to serve a mobile terminal 20, transfers its identifier to the neighbouring base stations 10, informs the neighbouring base stations 10 that, it starts to serve a mobile terminal 20, transfers the list of mobile terminals 20 served by the base station 10a.

At least one wireless interface 205 permits to communicate with the mobile terminals 20 which are in the cell 15 of the base station 10. The base station 10 can be equipped with more than one wireless interface 205, thus controlling multiple cells.

The processor 200 memorizes during a cell reselection procedure, the information related to the mobile terminal 20 Such information are latter used to authenticate the mobile terminal 20 and to check its access rights.

The processor 200 uses, prior to a possible handover procedure, the information related to the mobile terminal 20 to configure its wireless interface 205 and its network interface 206 so as to connect, when needed, the mobile terminal 20 to the network 30 via a newly established radio link and provide a relay of the information flow in the handover.

More precisely, the processor 200 makes a pre-processing procedure prior a probable handover procedure. The processor 200 memorises the information related to the mobile terminal 20, setups the wireless interface 205 and the network interface 206 and decides on which frequency /time slot /code it should operate according to the quality of service parameters to provide to the mobile terminal 20. The processor 200 checks the availability of hardware and software resources, at both wireless and network interfaces 205 and 206, and establishes a connection between hardware and software resource.

**Fig. 3** is a diagram representing the cells of the mobile telecommunication network.

The Fig. 3 is an example of an arrangement of the cells 15 of the base stations 10 showing the neighbouring relationships between the cells 15. The cell 15a has a plurality of neighbouring cells 15b, 15c, 15d, 15e, 15f and 15g. The cell 15b has a plurality of neighbouring cells 15a, 15c, 15j, 15i, 15h and 15g. The cells 151 and 15k are not neighbours of the cells 15a or 15b in the present example but we can understand that they can be considered as neighbours also if the mobile telecommunication comprises a large amount of cells or if cells 15 are micro cells.

**Fig. 4** is an algorithm executed by a base station when a mobile terminal enters in the cell of the base station and wherein, the base station transfers the information related to the mobile terminal to its neighbouring base stations according to a first mode of realisation of the present invention.

The present algorithm is executed by the processor 200 of a base station 10, as example, the base station 10b.

At the step S400, the processor 200 of the base station 10b, detects the arrival of a mobile terminal 20a in the cell 15b. The processor 200 detects the arrival of a mobile terminal 20a by receiving as example, through the wireless interface 205, a message for the attachment of the mobile terminal 20a to the base station 10b. The message comprises at least the unique identifier of the mobile terminal 20a. Such message is, as example, similar to the « IMSI attach » message sent by a mobile terminal 20a in the GSM cellular network. IMSI stands for International Mobile Subscriber Identity and GSM stands for Global System for Mobile communications.

At next step S401, the processor 200 checks whether or not, the mobile terminal 20a is known by the base station 10b. For that, the processor 200 checks if some information related to the mobile terminal 20a arc stored in the RAM memory 203. Such information may have been previously transferred according to the present invention, by a base station 10, as example the base station 10a, which was previously serving the mobile terminal 20a.

If some information related to the mobile terminal 20a are stored in the RAM memory 203, the processor 200 moves to step S403.

If no information related to the mobile terminal 20a are stored in the RAM memory 203, the processor 200 moves to step S402. Such case occurs when the mobile terminal 20a is switched on within the cell 15b or when, no information related to the mobile terminal 20a have been received from any of the neighbouring base stations 10.

At the step S402, the processor 200 transfers a message to the server 50 through the network interface 206 in order to get information about the mobile terminal 20a. Once the processor 200 receives a response from the server 50, it stores the information related to the mobile terminal 20a with its identifier. Then, it moves to step S403.

At step S403, the processor 200 enters into an pre-processing procedure. If the mobile terminal is in idle mode, the processor 200 executes a cell reselection pre-processing and memorizes the information related to the mobile terminal 20a in the RAM memory 203.

When a communication is established between the mobile terminal 20 and another telecommunication device, the processor 200 enters into a handover pre-processing procedure.

In such procedure, the processor 200 memorises the information related to the mobile terminal, setups, using the information related to the mobile terminal 20, the wireless interface 205 and the network interface 205 and decides on which frequency /time slot /code it should operate according to the quality of service parameters to provide to the mobile terminal 20. The processor 200 checks the availability of hardware and software resources, at both wireless and network interfaces 205 and 206, and establishes a connection between hardware and software resource.

A next step S404, the processor 200 checks whether or not it can grant access to the mobile terminal 20a.

If the mobile terminal is in an idle state, the processor 200 authenticates the mobile terminal 20a using the information transferred by the mobile terminal 20a and the information related to the mobile terminal 20a stored in the RAM memory 203. The information related to the mobile terminal 20a are information used by the base station 10b to authenticate the mobile terminal 20a. The information related to the mobile terminal 20a is, as example, an authentication key A. It can be also an identifier, a password, certificate or anything which can permit an authentication of the mobile terminal 20a. It can also be some other information, such as encryption key, or service access rights, that can be used outside of the scope of the authentication procedure.

As example, if the information related to the mobile terminal 20 is an authentication key A, the processor 200 transfers to the mobile terminal 20a a random codeword, the mobile terminal 20a calculates a new codeword using the received codeword and its own authentication key B and transfers the result to the base station 10b.

If the authentication succeeds, the access is granted. The processor 200 doesn't grant access to the mobile terminal 20a if the server 50 doesn't transfer information related to the mobile terminal 20a or if the result transferred by the mobile terminal 20a doesn't correspond to an expected result.

For a handover pre-processing, the processor 200 doesn't grant access to the mobile terminal 20a if it can not allocate, through the handover pre-processing procedure of step S403, some hardware and software resources to the mobile terminal 20a or if the mobile terminal 20a authentication fails.

When the processor 200 doesn't grant access, the present algorithm is stopped. If the access is granted, the base station 10b starts to serve the mobile terminal 20a, a communication can then be established or continued between the mobile terminal 20a and another telecommunication device through the base station 10b and the telecommunication network 30.

At next step S405, the processor 200 determines its neighbouring base stations 10.

For that, the processor 200 reads into the RAM memory 203 the identifier of the neighbouring base stations 10. Such identifiers are, as example, transferred by the server 50 to the base station 10a and stored in the RAM memory 203 when the base station 10a is installed or when a new neighbouring base station 10b is installed. In a variant of realization, the server 50 transfers also the identifiers of the neighbouring base stations 10 of the neighbouring base stations 10 of the base station 10a.

The determination of the neighbouring of base stations 10 is made by the server 50 using, as example, information from a Global Positioning System, or using an identifier associated to the network interface 206 of the base stations 10 or using any other means. As example, the neighbouring base stations of the base station 10b are the base stations 10g, 10h, 10i, 10j, 10c and 10a. The processor 200 obtains then the identifiers of the base stations 10g, 10h, 10i, 10j, 10c and 10a.

In a first variant of realization, if the processor 200 has determined at step S401 that the mobile terminal 20a is known by the base station 10b, the processor 200 determines also at step S405 the identifiers of the neighbouring base stations 10 of the base station 10a which had previously transferred the information related to the mobile terminal 20a and memorises the identifiers of its neighbouring base stations 10 which are not neighbours of the base station 10a which had previously transferred the information related to the mobile terminal 20a.

As example, the processor 200 obtains the identifiers of the neighbouring base stations 10 of the base station 10a, which are 10b, 10c, 10d, 10e, 10f and 10g. The processor 200 memorizes only the identifiers of the base stations 10h, 10i, 10j.

At next step S406, the processor 200 transfers a message to each neighbouring base station 10 10g, 10h, 10i, 10j, 10c and 10a. Such message informs these base stations 10 that it is now serving the mobile terminal 20a and comprises an identifier of the base station 10b and the identifier of the mobile terminal 20a.

The processor 200 transfers also in that message, or in another message, the information related to the mobile terminal 20a.

According to the first variant of realisation, the processor 200 transfers at step S406 a message to each neighbouring base station 10a 10g, 10h, 10i, 10j, 10c and 10a informing these base stations 10 that it is now serving the mobile terminal 20a and transfers to its neighbouring base stations 10h, 10i and 10j, which are not neighbours of the base station 10a which has previously transferred the information related to the mobile terminal 20a, a message comprising the information related to the mobile terminal 20a.

It has to be noted here that, in a second variant of realisation, the processor 200 transfers a message to all its neighbouring base stations 10g, 10h, 10i, 10j, 10c and 10a comprising an identifier of each mobile terminal 20 being currently served by the base station 10b. Such message comprises the identifiers of the mobile terminal 20a and 20b. The processor 200 transfers also to its neighbouring base stations 10h, 10i and 10j which are not neighbours of the base station 10a a message comprising the information related to the mobile terminal 20a.

**Fig. 5** is an algorithm executed by a base station when it stops to serve a mobile terminal according to the first mode of realization of the present invention.

A step S500, the processor 200, as example the processor 200 of the base station 10a, detects that the mobile terminal 20a is no more attached to the base station 10a. The detection is made, as example, by receiving a similar message as an « Explicit IMSI Detach » as disclosed in the GSM standard or according to a similar procedure as the one called « Implicit IMSI detach » in the GSM standard or by receiving a message from a neighbour base station 10 informing that the neighbouring base station 10, as example the base station 10b, serves the mobile terminal 20a.

A next step S501, the processor 200 determines the neighbouring base stations 10 of the base station 10a.

For that, the processor 200 reads into the RAM memory 203 the identifiers of the neighbouring base stations 10. As example, the processor 200 obtains the identifiers of the base stations 10b, 10c, 10d, 10e, 10f and 10g.

In a variant of realization, if the processor 200 receives a message from a neighbouring base station 10, as example the base station 10b, informing that it serves the mobile terminal 20a, it determines also the identifiers of the neighbouring base stations 10 of the base station 10b and keeps only the identifiers of its neighbouring base stations 10 which are not neighbour of the base station 10a.

The neighbouring base stations 10 of the base station 10b are the base stations 10g, 10h, 10i, 10j, 10c and 10a.

The processor 200 keeps only the identifiers of the base stations 10d, 10e, 10f.

At next step S502, the processor 200 transfers a message to each neighbouring base station 10b 10c, 10d, 10e, 10f, 10g. Such message informs these base stations 10 that base station 10a is no more serving the mobile terminal 20a and comprises an identifier of the base station 10a.

According to the variant of realisation, the processor 200 transfers at step S502 the above message to its neighbouring base stations 10d, 10e and 10f, which are not neighbours of the base station 10b, which is now serving the mobile terminal 20a.

It has to be noted here that, in another variant of realisation, the processor 200 transfers a message to all its neighbouring base stations 10b 10c, 10d, 10e, 10f, 10g comprising the identifier of each mobile terminal 20 being currently served by the base station 10b. Such message comprises the identifiers of the mobile terminal 20c.

**Fig. 6** is an algorithm for transferring the list of mobile terminals served by a base station according to a second mode of realization of the present invention.

In the second mode of realization, instead of sending a message to neighbours each time a new mobile terminal 20 is served by a base station 10 or a mobile terminal is no more served by a base station 10, each base station 10 sends periodically the identifiers of the mobile terminals 20 it is currently serving.

At step S600, the processor 200 of a base station 10 activate a timer noted T2.

At next step S601, the processor 200 checks whether or not the timer T2 is expired. As far as the timer T2 is not expired the processor 200 executes the loop constituted by the step S601.

When the time T2 expires, the processor 200 moves to step S602 and gets the list of mobile terminals served by the base station 10. Such list is stored in the RAM memory 203 and is updated each time a new mobile terminal 20 is served by a base station 10 or a mobile terminal 20 is no more served by a base station 10.

At next step S603, the processor 200 transfers a message to all its neighbouring base stations 10b 10c, 10d, 10c, 10f, 10g comprising an identifier of each mobile terminal 20 being currently served by the base station 10 and its identifier.

At the same step, the processor 200 transfers a message to at least a part of the neighbouring base stations comprising the information related to the mobile terminals 20 newly served during the duration of the timer T2.

**Fig. 7** is an algorithm executed by a base station when it stops to serve at least a mobile terminal according to a second mode of realization of the present invention.

According to that mode of realization, the processor 200 transfers a message to neighbouring base stations 10 once it is no more serving a predetermined number N of mobile terminals 20 and/or after the expiration of a timer T1.

At step S700, the processor 200 of a base station 10, as example the base station 10a, detects that a mobile terminal 20a is no more attached to the base station 10a. Such detection is similar as the one disclosed in step S500 of the Fig. 5.

A next step S701, the processor 200 checks, whether or not, the value of a variable Leave is equal to zero. The value of variable Leave is representative of the number of mobile terminals 20 that are no more served by the base station 10a and for which, the base station 10a has not yet transferred a message to its neighbouring base station 10 informing that the base station 10a is no more serving them.

If the variable Leave is different from zero, the processor 200 moves to the step S703. If the variable Leave is equal to zero, the processor 200 moves to step S702.

At step S702, the processor 200 resets the timer T1, and moves to step S703.

At step S703, the processor 200 increments from one unit the value of the variable Leave.

At step S704, the processor 200 checks whether or not the value of the variable Leave is equal to the predetermined value N.

If the variable Leave is not equal to N, the processor 200 moves to step S705 and memorises an information representative of the stops of serving the mobile terminal 20.

The processor 200, then moves to step S706 when checks whether or not the timer T 1 expires. If the timer T1 is not expired, the processor 200 returns to step S700 and waits a new detection of the stop to serve another mobile terminal 20.

If the timer T1 is expired, the processor 200 moves to step S708.

If the value of the variable Leave is equal to N, the processor 200 moves from step S704 to step S707.

At that step, the processor 200 resets the value of the variable Leave.

The processor 200 moves after to step S708.

A next step S708, the processor 200 determines its neighbouring base stations 10 on the same way as it has been explained in reference to step S502 of the Fig. 5.

At next step S709, the processor 200 transfers a message to the respective base stations 10 of which the identifier has been determined. Such message informs these base stations 10 that it is no more serving the mobile terminals 20 for which information have been stored at step S705.

In a variant of realisation, the message comprises the list of the mobile terminals 20 served by the base station 10a.

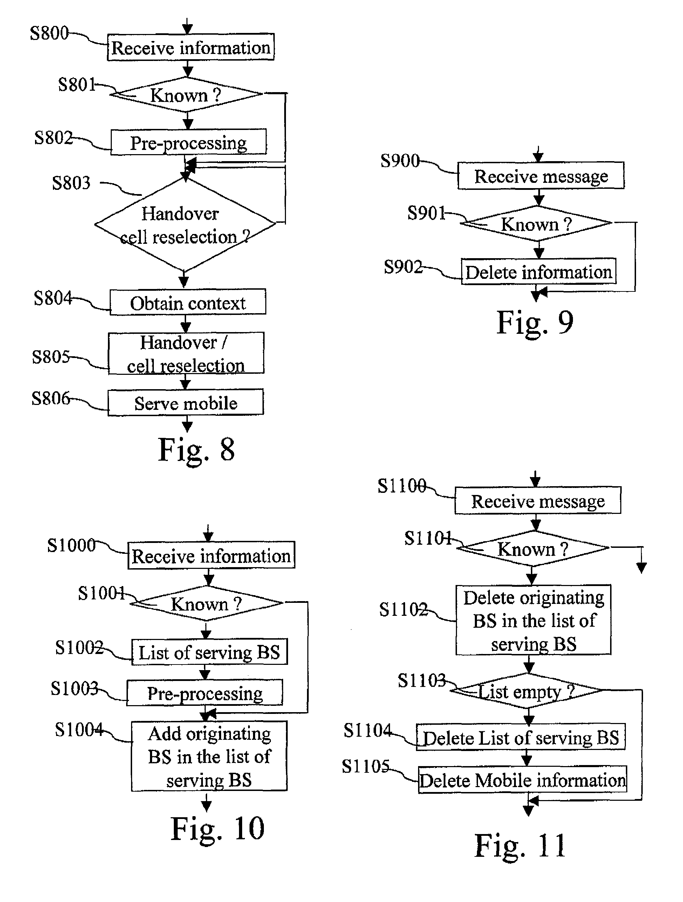

**Fig. 8** is an algorithm executed by a base station when it receives a message from a neighbouring base station informing that the neighbouring base station serves a mobile terminal according to the first mode of realization of the present invention.

At step S800, the processor 200, as example the processor 200 of the base station 10i, receives a message from a neighbouring base station 10, as example the base station 10b, informing that the base station 10b serves the mobile terminal 20a. The processor 200 receives also in such message or a consecutive one, the information related to the mobile terminal 20a.

At next step S801, the processor 200 checks if the mobile terminal 20a is known or not by the base station 10i. For that, the processor 200 checks if some information related to the mobile terminal 20a or are stored in the RAM memory 203.

If some information related to the mobile terminal 20a are stored in the RAM memory 203, the processor 200 move to step S803. If no information related to the mobile terminal 20a are stored in the RAM memory 203, the processor 200 moves to step S802, and executes a pre-processing procedure.

At step S802, if the mobile terminal 20a is in an idle mode, the processor 200 executes a cell reselection pre-processing procedure which consists to store the information related to the mobile terminal 20 in the RAM memory 203. If the mobile terminal 20a is in communication with another telecommunication device, the processor 200 executes a handover pre-processing procedure which consists to store the information related to the mobile terminal 20 in the RAM memory 203, allocate, through the handover pre-processing procedure of step S802, some hardware and software resources to the mobile terminal 20a.

At next step S803, the processor 200, checks whether or not it is requested that the mobile station 20 operates a cell reselection process or a handover procedure with base station 10i.

As far as no cell reselection nor handover procedure is requested, the processor 200 executes the step S803.

If a cell reselection or a handover procedure is detected, the processor 200 moves to step S804.

At the step S804, the processor 200 obtains the context of the cell reselection process or the context of the handover procedure. If a cell reselection process is detected, the context of the cell reselection process is the information related to the mobile terminal 20a stored previously stored at step S802 in the RAM memory 203. If a handover procedure is detected, the context of the handover procedure comprises the hardware and software resources allocated to the mobile terminal 20a, as well as the other information related to the mobile terminal 20a, stored previously at step S802 in the RAM memory 203.

At next step S805, the processor 200 proceeds to the cell reselection or the handover procedure with the mobile terminal 20a using the context obtained at step S803. More precisely, in case of cell reselection, the processor 200 handles information related to the mobile terminal 20a in the scope of an authentication process. In case of handover, the processor 200 activates the hardware and software resources allocated to the mobile terminal 20a, to establish a radio link between the network interface 206 and the mobile terminal 20a via the radio interface 205.

If the cell reselection or handover procedure succeeds, the processor 200 moves to step S806 and starts to serve the mobile terminal 20a.

It has to be noted that the processor 200 executes also the step S405 and S406 as described in the Fig. 4.

**Fig. 9** is an algorithm executed by a base station when it receives a message representative of the stop to serve at least a mobile terminal by a neighbouring base station according to the Figs. 5 or 7 of the present invention.

At step S900, the processor 200, as example the processor 200 of the base station 10e, receives a message from a neighbouring base station 10, as example the base station 10a, informing that the base station 10a stops to serve at least the mobile terminal 20a. Such message is a message as transferred in the step S502 of the Fig. 5 or in the step S709 of the Fig. 7.

At next step S901, the processor 200 checks if at least one of the mobile terminal 20a indicated in the received message is known or not by the base station 10e. For that, the processor 200 checks if some information related to each mobile terminal 20 for which an identifier is comprised in the message are stored in the RAM memory 203.

If no information related any of these mobile terminals 20 are stored in the RAM memory 203, the processor 200 stops the present algorithm. If some information related to one or more mobile terminals 20 are stored in the RAM memory 203, the processor 200 moves to step S902, deletes in the memory 203, the information related to each of these mobile terminals 20 and stops the present algorithm.

**Fig. 10** is an algorithm executed by a base station when it receives a message from a neighbouring base station informing that the neighbouring base station serves at least a mobilc terminal according to the Fig. 4 or the Fig. 6 of the present invention.

According to that algorithm, one or more base stations 10 are able to serve simultaneously a mobile terminal 20, as example the mobile terminal 20a.

At step S1000, the processor 200, as example the processor 200 of the base station 10i, receives a message from a neighbouring base station 10, as example the base station 10b, informing that the base station 10b serves the mobile terminal 20a. Such message comprises the information related to the mobile terminal 20a or is followed by a message comprising the information related to the mobile terminal 20a.

At next step S1001, the processor 200 checks if the mobile terminal 20a is known or not by the base station 10i. For that, the processor 200 checks if some information related to the mobile terminal 20a are stored in the RAM memory 203.

If some information related to the mobile terminal 20a are stored in the RAM memory 203, the processor 200 moves to step S1004. If no information related to the mobile terminal 20a are stored in the RAM memory 203, the processor 200 moves to step S1002.

At step S1002, the processor 200 creates a list of base stations 10 which serve the mobile terminal 20 for which information have been received at step S1000.

At next step S1003, the processor 200 executes a pre-processing step as the step S802 of the Fig. 8 for the mobile terminal 20a.

At step S1004, the processor 200 stores the identifier of the base station 10a which sent the message received at step S1000 inside a list of variable size containing the base stations 10 serving the mobile terminal 20a. Once the processor 200 completes that step, it stops the present algorithm.

It has to be noted here that, if the received message is a message transferred according to the Fig. 6, the processor 200 executes the steps S1002 and S1003 only if the base station identifier and/or the information related at least one the mobile terminal 20a have not been already stored.

Fig. 11 is an algorithm executed by a base station for maintaining a list of the base stations which serve a mobile terminal according to the present invention when it receives a message representative of the stop to serve at least a mobile terminal by a neighbouring base station according to according to the Figs. 5 or 6 or 7 of the present invention.

According to that mode of realization, one or more base stations 10 are able to serve a mobile terminal 20 simultaneously. Such case occurs in the case where the mobile terminal 20 enters into a macro-diversity handover or a soft handover, or at the transition time where the mobile terminal 20 is making a hard handover between two cells with a break-after-make mode.

At step S1100, the processor 200, as example, the processor 200 of the base station 10e, receives a message from a neighbouring base station 10, as example the base station 10a, informing that the base station 10a stops to serve at least the mobile terminal 20a. Such message is a message as transferred in the step S502 of the Fig. 5 or a message as transferred in the step S709 of the Fig. 7.

At next step S1101, the processor 200 checks if at least one of the mobile terminal 20 indicated in the received message is known or not by the base station 10e. For that, the processor 200 checks if some information related to the mobile terminal 20a are stored in the RAM memory 203.

If no information related to the one or each mobile terminal 20a are stored in the RAM memory 203, the processor 200 stops the present algorithm.

If some information related to at least one mobile terminal 20 are stored in the RAM memory 203, the processor 200 moves to step S1102. At that step, the processor deletes in each list of base stations 10 which serve a mobile terminal 20 comprised in the message and for which information related to the mobile terminal are stored in the RAM memory 203, the identifier of the base station 10 which sent the message received at step S1100.

At next step S1103, the processor 200 checks if there is at least one empty list of base stations 10 which serve a mobile terminal 20. If there is no empty list, the processor 200 stops the present algorithm.

If there is one or more empty list of base stations 10 which serve a mobile terminal 20, the processor 200 moves to step S1104. At that step, the processor 200 deletes each empty list of base stations 10 which serve a mobile terminal 20.

The processor 200 then moves to step S1105.

At step S1105, the processor 200 deletes the information related to the mobile terminal 20 in the memory 203 and stops the present algorithm.

It has to be noted here that, when the neighbouring base stations 10 send periodically the list of mobile terminals 20 they are serving according to the Fig. 6, the processor 200, by comparing the information received and the information related to the mobile terminals 20 stored in the memory 203 and the lists of the base stations 10 which serve the mobile terminal 20, determines which base station 10 is no more serving a mobile terminal 20 and uses that information in order to execute the present algorithm.

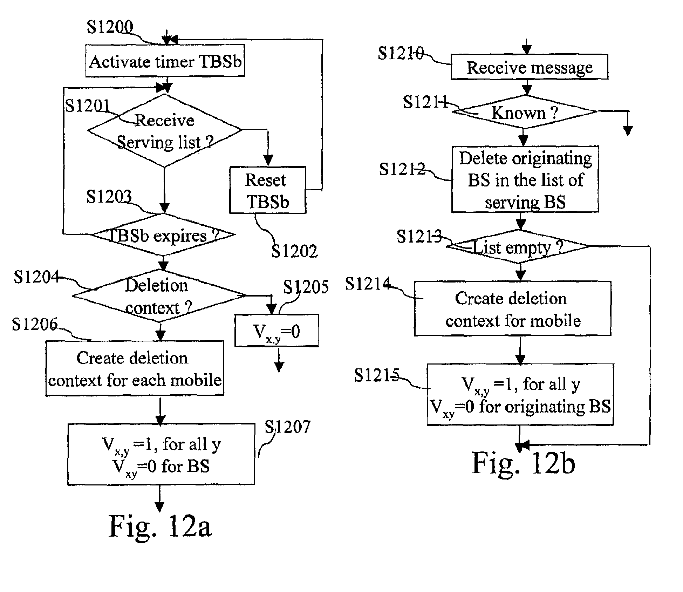

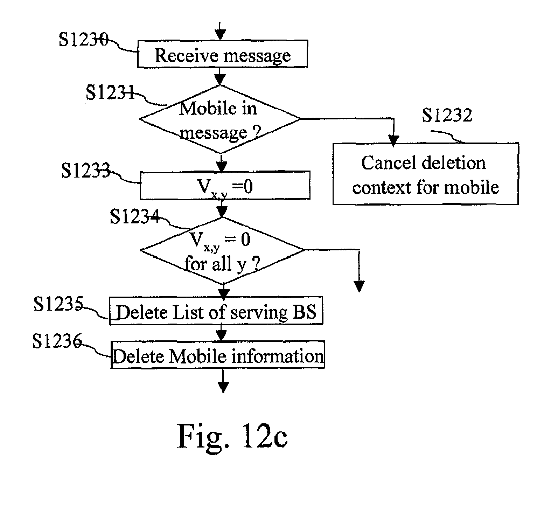

**Figs. 12a, 12b and 12c** disclose algorithms of a variant of the algorithm of the Fig. 11 executed in parallel by a base station for maintaining a list of the base stations which serve a mobile terminal when it receives a message representative of the stop to serve at least a mobile terminal by a neighbouring base station according to the Fig. 6 of the present invention.

It has to be noted that the list of the base stations which serve a mobile terminal can be limited to a unique base station 10.

The processor 200 of each base station 10 executes the present algorithms in parallel for each of its neighbouring base stations 10.

The algorithm of the **Fig. 12a** is described using the following example: the processor 200 of the base station 10i is analysing the reception of the message transferred by the base station 10b.

At step S1200, the processor 200 activates one timer TBSb associated the neighbouring base stations 10b.

At next step S1201, the processor 200 checks whether of not a message is received from the base station 10b. Such message is a message as the one disclosed in the step S603 of the Fig. 6. It comprises the list of the mobile terminals 20 served by the base station 10b.

If a message is received from the base station 10b, the processor 200 moves to step S1202, resets the Timer TBSb and returns to the step S1200.

If no message is received from the base station 10b, the processor 200 moves to step S1203 and checks whether or not the timer TBSb is expired.

If the timer TBSb is not expired, the processor 200 returns to step S1201.

If the timer TBSb is expired, the processor 200 moves to step S1204 and checks if a deletion context exists for each mobile terminal 20 previously served by the base station 10b. If a deletion context exists for a mobile terminal 20, the processor 200 moves to step S1205. If no deletion context exists for a mobile terminal 20, the processor 200 moves to step S1206.

At step S1205, the processor 200 sets for each mobile terminal 20 having, comprised in its list of serving base stations 10, the identifier of the base station 10b for which a message has not been received prior to the expiration of the timer TBSb, a variable noted V_{x,y} at a predetermined value, as example 0. x stands for the identifier of each mobile terminal 20 having, comprised in its list of serving base stations, the identifier of the base station for which the reception of messages was analysed, and y denotes the identifier of the base station 10 for which the message has not been received prior to the expiration of the timer TBSb.

Once the processor 200 completes that step, it stops the present algorithm for the base station 10 for which the messages were analysed until a new message is received from that base station 10.

At step S1206, the processor 200 creates a deletion context for each mobile terminal 20 having, comprised in its list of serving base stations 10, the identifier of the base station 10b for which a message has not been received prior to expiration of timer TBSb and not associated yet to any deletion context. The processor 200 creates a deletion context by instantiating a variable noted V_{x,y} at a predetermined value, as example 1. x stands for the identifier of each mobile terminal 20 having, comprised in its list of serving base stations, the identifier of the base station 10b for which a message has not been received prior to the expiration of the timer TBSb, y stands for the identifiers of the base station that are neighbour to the base station 10i.

The processor 200 then moves to step S1207.

At step S1207, the processor 200 sets, for each mobile terminal 20 previously served by the base station 10b, its associated variable noted V_{x,y} at a predetermined value, as example 0. The processor 200 then stops the present algorithm.

The processor 200 executes the algorithm of the **Fig. 12b** in parallel of the algorithm of the Fig. 12a.

At step S1210, the processor 200, as example the processor of the base station 10i, receives a message from a neighbouring base station 10, as example the base station 10b, comprising the list of the mobile terminals served by the base station 10b. Such message is a message as transferred in the step S603 of the Fig. 6.

At next step S1211, the processor 200 checks if at least one identifier of the mobile terminals 20 comprised in the received message is known or not by the base station 10i. For that, the processor 200 checks if information related to each of these mobile terminals 20 is stored in the RAM memory 203.

If no information related to the one or each mobile terminal 20a is stored in the RAM memory 203, the processor 200 stops the present algorithm and waits a new message.

If information related to at least one mobile terminal 20 are stored in the RAM memory 203, the processor 200 moves to step S1212.

At that step, the processor 200 deletes, in each list of base stations 10 which serve a mobile terminal 20 identified in the message and for which information related to the mobile terminal are stored in the RAM memory 203, the identifier of the base station 10 which sent the message received at step S1200.

At next step S1213, the processor 200 checks if there is at least one empty list of the base stations 10 which serve a mobile terminal 20. If there is no empty list, the processor 200 stops the present algorithm.

If there is one or more empty list of base stations 10 serving a mobile terminal 20, the processor 200 moves to step S1214. At that step, the processor 200 creates a deletion context for each mobile terminal 20 which has its list of serving base stations 10 empty. The deletion context creation is similar as the one disclosed at step S1206 of the Fig. 12a.

The processor 200 then moves to step S1215.

At step S1215, the processor 200 sets, for each mobile terminal 20 having a list of serving base stations 10 empty, its associated variable noted V_{x,y} at a predetermined value, as example 0. The processor 200 then stops the present algorithm.

The processor 200 executes the algorithm of the Fig. 12c in parallel of the algorithm of the Fig. 12a and 12b.

The processor 200 of each base station 20 executes the present algorithm in parallel for each of the mobile terminals 20 which has a deletion context.

At step S1230, the processor 200 receives a message from a neighbouring base station 10, as example the base station 10b, comprising the list of the mobile terminals served by the base station 10b. Such message is a message as transferred in the step S603 of the Fig. 6.

At next step S1231, the processor 200 checks if there is an identifier of the considered mobile terminal 20 having a deletion context comprised in the received message.

If there is such identifier, the processor 200 moves to step S1232 and cancels the deletion context for that mobile terminal 20 and stops the present algorithm for that mobile terminal 20.

If such identifier is not in the receive message, the processor 200 moves to step S1233 and sets for the mobile terminal 20 its associated variable noted V_{x,y} at a. predetermined value, as example 0. x stands for the identifier of the mobile terminal and y stands for the identifier of the base station which sent the message received at step S1230.

At next step S1234, the processor 200 checks if all the variable V_{x,y} are equal to the predetermined value, wherein y is equal to the identifier of all the neighbouring base stations 10 of the base station 10i. If one variable is different from zero, the processor returns to step S1230 and waits a new message.

If all the variables are equal to the predetermined value, the processor 200 moves to step S1235 and deletes the list of the base stations which serve the considered mobile terminal.

At next step S1236, the processor 200 deletes the information related to the considered mobile terminal 20 and stops the present algorithm.

It has to be noted here that, in a variant, the algorithm of the Fig. 12a is not executed.

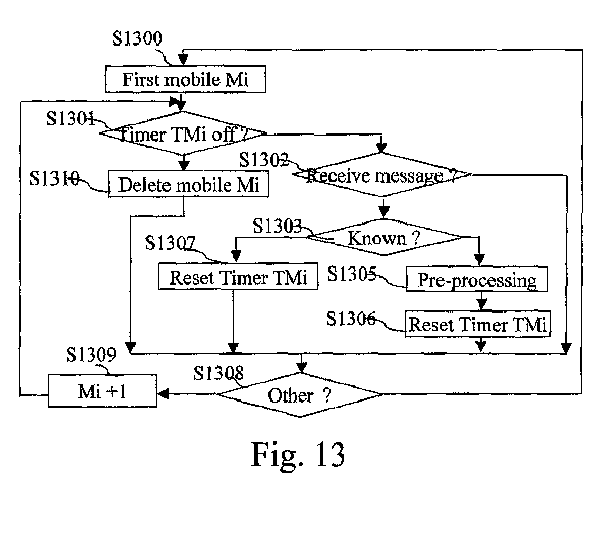

Fig. 13 discloses an algorithm of another variant of the algorithm of the Fig. 11 executed by a base station for maintaining a list of the base stations which serve a mobile terminal.

According to that mode of realization, when a base station 10 stops to serve a mobile terminal 20, it doesn't inform other base station 10 about that event. Each base station 10 has a timer associated to each mobile terminal 20 served by at least a neighbouring base station 10. That timer is used in order to decide whether or not information related to a mobile terminal 20 should be deleted and if a base station 10 should be removed from the list of the base stations 10 which serve the mobile terminal 20. In that mode or realization, each base station 10 informs periodically which mobile terminal 20 it is serving as disclosed in the Fig. 6.

At step S1300, the processor 200, as example the processor 200 of the base station 10e, considers a first mobile 20 of the mobile terminal 20 being served by one of the neighbouring base stations 10.

At step S1301, the processor 200 checks if the timer, noted TMi, associated to the mobile terminal 10, noted Mi, under process is expired or not. If the timer TMi associated to the mobile Mi is expired, the processor 200 moves to step S1310. If the timer TMi associated to the mobile terminal Mi is not expired, the processor 200 moves to step S1302.

At step S1302, the processor 200 checks whether or not it receives a message from any of its neighbouring base stations 10.

If such message is not received, the processor 200 moves to step S1308. If such message is received, the processor 200 moves to step S1303 and checks if at least one of the mobile terminals 20 identified in the received message is known or not by the base station 10e. For that, the processor 200 checks if some information related to the mobile terminal 20 are stored in the RAM memory 203.

If some information related to one or more mobile terminals 20 are stored in the RAM memory 203, the processor 200 moves to step S1307 and resets the timer TMi associated to each mobile terminal 20 known and indicated in the message.

After that, the processor 200 moves to step S1308.

If no information related to at least one mobile terminal 20 are stored in the RAM memory 203, the processor 200 moves from step S1303 to S1305 and executes a pre-processing step as the step S802 of the Fig. 8 for the at least one unknown mobile terminal 20.

After that, the processor moves to step S1306 and resets the timers associated to each mobile terminals 20 for which information have been stored at step S1305. After that, the processor 200 moves to step S1308.

At step S1308, the processor 200 checks if there is one other mobile terminal 20 being served by a neighbouring base station 10.

It there is at least one other mobile terminal 20, the processor 200 moves to step S1309, considers the following mobile terminal 20 and returns to step S1301.

It there is no other mobile terminal 20, the processor 200 returns to step S1300.

If at step S1301, the timer TMi associated to the mobile Mi under process is expired, the processor 200 moves to step S1310 and deletes, if no other neighbouring base stations 10 serve that mobile terminal 20, the information related to the mobile terminal 20 under process. After that, the processor 200 moves to step S1308.

It has to be noted here that, in a variant of realization, information related to a mobile terminal 20 are deleted only after receiving more than one message, by example two, from a neighbouring base station 10 indicating that the mobile terminal 20 is not served by that neighbouring base station 10.

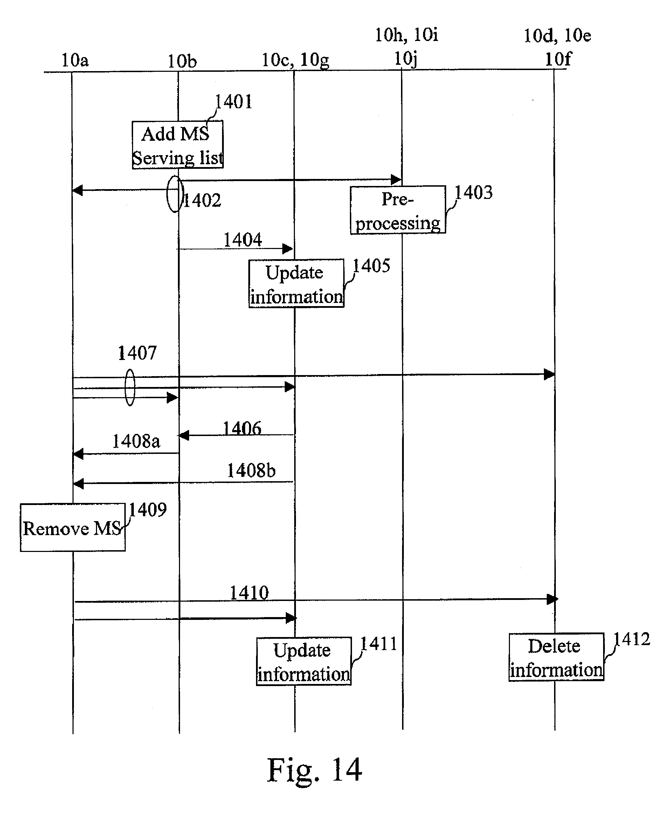

Fig. 14 is an example of a diagram describing the overview of the different operations executed by the base stations and the exchange of messages between the base stations when a mobile terminal moves from one cell to a neighbouring cell according to one variant of the algorithm of Fig. 11.

When a mobile terminal 20a moves from one cell to another one, as example moves from the cell 15a to the cell 15b. The base station 10b is informed during the cell reselection or the handover procedure that it is now serving the mobile 20. The base station 10b adds the mobile terminal 20a in its list of served mobile terminals at step 1401. The base station 10b transfers to its neighbouring base stations 10h, 10i and 10j which are not neighbours of the base station 10a, the information related to the mobile terminal 20a and informs these base stations 10 that it is serving the mobile terminal 20a. Such transfer is depicted by the arrow noted 1402.

The base stations 10h, 10i and 10j executes at step 1403 a pre-processing step as the one disclosed at step S802 of the Fig. 8 and update their respective list of the base stations which serve the mobile terminal 20a.

The base station 10b transfers the identifier of the mobile terminal 20a in order to inform its neighbouring base stations 10c and 10g which are neighbours of the base station 10a that it is serving the mobile terminal 20a. Such transfer is depicted by the arrow noted 1404.

The base stations 10c and 10g update at step 1405 their respective list of the base stations which serve the mobile terminal 20a.

The base station 10a transfers regularly to its neighbouring base stations 10b 10c, 10g, 10d, 10d, 10e and 10f the list of served mobile terminals 20. Such transfer is depicted by the arrows noted 1407.

Each base station 10c and 10g transfers a confirmation message to the base station 10b informing it that the update has been made. Such transfer is depicted by the arrow noted 1406. In response, the base station 10b transfers a confirmation message to the base station 10a informing it that the update has been made. Such transfer is depicted by the arrow noted 1408a.

In a variant of realisation, each base station 10c and 10g transfers also a confirmation message to the base station 10a informing it that the update has been made. Such transfer is depicted by the arrow noted 1408b.

Once the base station 10a receives the confirmation messages 1408a or 1408b, it removes from the list of served mobile terminals, the identifier of the mobile terminal 20a at step 1409.

The base station 10a transfers after, to its neighbouring base stations 10b 10c, 10g, 10d, 10d, 10e and 10f the modified list of served mobile terminals 20. Such transfer is depicted by the arrows noted 1410.

The base stations 10c and 10g update at step 1411 their respective list of the base stations 10 which serve the mobile terminal 20a by removing the identifier of the base station 10a from it.

The base stations 10d, 10e and 10f update at step 1412 their respective list of the base stations 10 which serve the mobile terminal 20 by removing the identifier of the base station 10a from it and delete the information related to the mobile terminal 20.

Naturally, many modifications can be made to the embodiments of the invention described above without departing from the scope of the present invention.

## Claims

1. Method for transferring information related to at least a mobile terminal (20) in a mobile telecommunication network comprising a plurality of base stations (10) linked each other by a telecommunication network (30), **characterised in that** the method comprises the steps executed by a base station (10) serving a mobile terminal (10) of:
- obtaining (S405) the identifiers of at least two neighbouring base stations,
- transferring (S406) to at least the two neighbouring base stations, information related to at least a mobile terminal enabling at least one neighbouring base station to serve the mobile terminal.

2. Method according to claim 1, **characterised in that** the method further comprises the step of transmitting (S603) a list of the identifiers of the mobile terminals served by the base station to its neighbouring base stations.

3. Method according to claim 2, **characterised in that** the list of the identifiers of the mobile terminals served by the base station is transferred periodically or when the base station starts to serve a new mobile terminal.

4. Method according to claim 1, **characterised in that** the method further comprises the step of transferring to its neighbouring base stations the identifier of at least a mobile terminal the base station stops to served to its neighbouring base stations.

5. Method according to claim 4, **characterised in that** the identifier of at least a mobile terminals the base station stops to served is transferred (S502) when the base station stops to serve a mobile terminal or when the base station has stopped to serve (S709) a predetermined number of mobile terminals.

6. Method according to any of the claims 1 to 5, **characterised in that** the method, prior to transfer the information related to the at least one mobile terminal has further step of :
- receiving from another base station or a server (50) of the mobile telecommunication network the information related to the at least one mobile terminal.

7. Method according to claim 6, **characterised in that** a neighbouring base station is a base station the cell of which is neighbours to the cell of the base station and the information related to the at least one mobile terminal are transferred to the neighbouring base stations which are not neighbours to the cell of the base station from which the information related to the at least one mobile terminal as been received.

8. Method according to any of the claims 1 to 7, **characterised in that** the method has further step of :
- receiving (S1000) from a neighbouring base station an identifier of at least one mobile terminal the neighbouring base station starts to serve ;
- memorising (1002) the identifier of the neighbouring base station in a list of base stations which serve the mobile terminal.

9. Method according to any of the claims 1 to 7, **characterised in that** the method has further step of :
- receiving (S1100) from a neighbouring base station an identifier of at least one mobile terminal the neighbouring base station stops to serve ;
- removing (S1102) the identifier of the neighbouring base station from the list of base stations which serve the mobile terminal.

10. Method according to claim 8, **characterised in that** the method has further step of deleting the information related to the mobile terminal if the list of base stations which serve the mobile terminal is empty or if each list of served mobile terminals transmitted by each neighbouring base stations doesn't include the identifier of the mobile terminal or if each list of served mobile terminals transmitted by neighbouring base stations within a predetermined period of time doesn't include the identifier of the mobile terminal or if the list of base stations which serve the mobile terminal is empty and each list of served mobile terminals transmitted by each neighbouring base stations doesn't include the identifier of the mobile terminal or if the list of base stations which serve the mobile terminal is empty and each list of served mobile terminals transmitted by neighbouring base stations within a predetermined period of time doesn't include the identifier of the mobile terminal.

11. Method according to claim 8, **characterised in that** the method comprises the step of :
- activating a timer associated to each received information related to a mobile terminal ;
- resetting (S1307, S1306) each timer associated to the information related to mobile terminals if a list of served mobile terminals is received from a neighbouring base station and comprises an identifier of the mobile terminal ;
- deleting (S1310) the information related to a mobile terminal if the timer associated to the information related to the mobile terminal expires.

12. Device for transferring information related to at least a mobile terminal in a mobile telecommunication network comprising a plurality of base stations linked each other by a telecommunication network, **characterised in that** the device is included in a base station and comprises:
- means for obtaining the identifier of at least two neighbouring base stations,
- means for transferring to the least two neighbouring base stations information related to at least a mobile terminal enabling at least one neighbouring base station to serve the mobile terminal.

13. Method for enabling a neighbouring base station of a base station serving a mobile terminal to serve the mobile terminal in a mobile telecommunication network comprising a plurality of base stations linked each other by a telecommunication network, **characterised in that** the method comprises the steps executed by the neighbouring base station of the base station serving the mobile terminal of :
- receiving (S800) information related to a mobile terminal from the base station serving the mobile terminal,
- detecting (S803) a mobility process between the mobile terminal and the neighbouring base station,
- enabling (S806) the serve of the mobile terminal using the received information.

14. Device for enabling a neighbouring base station of a base station serving a mobile terminal to serve the mobile terminal in a mobile telecommunication network comprising a plurality of base stations linked each other by a telecommunication network, **characterised in that** the device is included in the neighbouring base station of the base station serving the mobile terminal and comprises:
- means for receiving information related to a mobile terminal from the base station serving the mobile terminal,
- means for detecting a mobility process between the mobile terminal and the neighbouring base station,
- means for enabling the serve of the mobile terminal using the received information.

15. Signal transmitted by a base station of a mobile telecommunication network to at least a neighbouring base station of the mobile telecommunication network passing through a telecommunication network linking the base stations, **characterised in that** the signal comprises information related to at least a mobile terminal served by the base station enabling at least one neighbouring base station to serve the mobile terminal.

16. Computer program which can be directly loadable into a programmable device, comprising instructions or portions of code for implementing the steps of the method according to claims 1 to 11, when said computer program is executed on a programmable device.

17. Computer program which can be directly loadable into a programmable device, comprising instructions or portions of code for implementing the steps of the method according to claim 13, when said computer program is executed on a programmable device.

## Amended claims

### Amended claims in accordance with Rule 86(2) EPC.

**1.** Method for transferring information related to at least a mobile terminal (20) in a mobile telecommunication network comprising a plurality of base stations (10) linked each other by a telecommunication network (30), **characterised in that** the method comprises the steps executed by a base station (10) serving a mobile terminal (10) of:
- obtaining (S405) the identifiers of at least two neighbouring base stations,
- transferring (S406) to the at least two neighbouring base stations, information related to at least a mobile terminal, said information enabling at least one neighbouring base station to serve the mobile terminal.

**2.** Method according to claim 1, **characterised in that** the method further comprises the step of transmitting (S603) a list of the identifiers of the mobile terminals served by the base station to the at least two neighbouring base stations.

**3.** Method according to claim 2, **characterised in that** the list of the identifiers of the mobile terminals served by the base station is transferred periodically or when the base station starts to serve a new mobile terminal.

**4.** Method according to claim 1, **characterised in that** the method further comprises the step of transferring to its neighbouring base stations the identifier of at least a mobile terminal the base station stops to served.

**5.** Method according to claim 4, **characterised in that** the identifier of at least a mobile terminal the base station stops to served is transferred (S502) when the base station stops to serve the mobile terminal or the identifiers of the mobile terminals the base station stops to serve are transferred when the base station has stopped to serve (S709) a predetermined number of mobile terminals.

**6.** Method according to any of the claims 1 to 5, **characterised in that** the method, prior to transfer the information related to the at least one mobile terminal has further step of :
- receiving from another base station or a server (50) of the mobile telecommunication network the information related to the at least one mobile terminal.

**7.** Method according to claim 6, **characterised in that** a neighbouring base station is a base station the cell of which is neighbours to the cell of the base station and the information related to the at least one mobile terminal are transferred to the neighbouring base stations which are not neighbours to the cell of the base station from which the information related to the at least one mobile terminal as been received.

**8.** Method according to any of the claims 1 to 7, **characterised in that** the method has further step of :
- receiving (S1000) from a neighbouring base station an identifier of at least one mobile terminal the neighbouring base station starts to serve ;
- memorising (1002) the identifier of the neighbouring base station in a list of base stations which serve the mobile terminal.

**9.** Method according to any of the claims 1 to 7, **characterised in that** the method has further step of :
- receiving (S1100) from a neighbouring base station an identifier of at least one mobile terminal the neighbouring base station stops to serve ;
- removing (S1102) the identifier of the neighbouring base station from the list of base stations which serve the mobile terminal.

**10.** Method according to claim 8, **characterised in that** the method has further step of deleting the information related to the mobile terminal if the list of base stations which serve the mobile terminal is empty or if each list of served mobile terminals transmitted by each neighbouring base stations doesn't include the identifier of the mobile terminal or if each list of served mobile terminals transmitted by neighbouring base stations within a predetermined period of time doesn't include the identifier of the mobile terminal or if the list of base stations which serve the mobile terminal is empty and each list of served mobile terminals transmitted by each neighbouring base stations doesn't include the identifier of the mobile terminal or if the list of base stations which serve the mobile terminal is empty and each list of served mobile terminals transmitted by neighbouring base stations within a predetermined period of time doesn't include the identifier of the mobile terminal.

**11.** Method according to claim 8, **characterised in that** the method comprises the step of :
- activating a timer associated to each received information related to a mobile terminal ;
- resetting (S1307, S1306) each timer associated to the information related to mobile terminals if a list of served mobile terminals is received from a neighbouring base station and comprises an identifier of the mobile terminal ;
- deleting (S1310) the information related to a mobile terminal if the timer associated to the information related to the mobile terminal expires.

**12.** Device for transferring information related to at least a mobile terminal in a mobile telecommunication network comprising a plurality of base stations linked each other by a telecommunication network, **characterised in that** the device is included in a base station and comprises:
- means for obtaining the identifier of at least two neighbouring base stations,
- means for transferring to the least two neighbouring base stations information related to at least a mobile terminal, said information enabling at least one neighbouring base station to serve the mobile terminal.

**13.** Method for enabling a neighbouring base station of a base station serving a mobile terminal to serve the mobile terminal in a mobile telecommunication network comprising a plurality of base stations linked each other by a telecommunication network, **characterised in that** the method comprises the steps executed by the neighbouring base station of the base station serving the mobile terminal of :
- receiving (S800) information related to a mobile terminal from the base station serving the mobile terminal,
- detecting (S803) a mobility process between the mobile terminal and the neighbouring base station,
- enabling (S806) the serve of the mobile terminal using the received information.

**14.** Device for enabling a neighbouring base station of a base station serving a mobile terminal to serve the mobile terminal in a mobile telecommunication network comprising a plurality of base stations linked each other by a telecommunication network, **characterised in that** the device is included in the neighbouring base station of the base station serving the mobile terminal and comprises:
- means for receiving information related to a mobile terminal from the base station serving the mobile terminal,
- means for detecting a mobility process between the mobile terminal and the neighbouring base station,
- means for enabling the serve of the mobile terminal using the received information.

**15.** Signal transmitted by a base station of a mobile telecommunication network to at least a neighbouring base station of the mobile telecommunication network passing through a telecommunication network linking the base stations, **characterised in that** the signal comprises information related to at least a mobile terminal served by the base station enabling at least one neighbouring base station to serve the mobile terminal.

**16.** Computer program which can be directly loadable into a programmable device, comprising instructions or portions of code for implementing the steps of the method according to claims 1 to 11, when said computer program is executed on a programmable device.

**17.** Computer program which can be directly loadable into a programmable device, comprising instructions or portions of code for implementing the steps of the method according to claim 13, when said computer program is executed on a programmable device.
